# EUROPEAN PATENT APPLICATION

(11) **EP 4 644 089 A1**
(43) Date of publication of application: **05.11.2025**
(21) Application number: 23928217.1
(22) Date of filing: 27.06.2023
(51) Int. Cl.: B29C 49/42, B29C 49/64

(54) **PREFORM LIFTING/LOWERING AND ROTATING MECHANISM AND BOTTLE PREFORM HEATING DEVICE**

(30) Priority: 21.03.2023 CN 202310276314
(71) Applicant: Guangzhou Tech-Long Packaging Machinery Co., Ltd, Guangzhou, Guangdong 510530 (CN)
(72) Inventor: ZOU, Daqun, Guangzhou, Guangdong 510530 (CN); HE, Wenming, Guangzhou, Guangdong 510530 (CN); DENG, Zhijun, Guangzhou, Guangdong 510530 (CN)
(74) Representative: HGF
(86) International application number: PCT/CN2023/102607
(87) International publication number: WO 2024/192911

(57) **Abstract**

Provided are a preform elevating and rotating mechanism and a bottle preform heating device, which relate to the field of bottle blowing technologies. The preform elevating and rotating mechanism includes a bracket (41), a preform insertion assembly (42), an elevating drive assembly (43), and a rotation drive assembly (45). The bracket (41) is fixed on a carrier tray (22) of a carrier mechanism (2), where the carrier tray (22) is capable of driving the bracket (41) to rotate. The preform insertion assembly (42) includes an elevating base (421) and a preform insertion member (422), where the elevating base (421) is slidably mounted on the bracket (41), and the preform insertion member (422) is rotatably mounted on the elevating base (421). The elevating drive assembly (43) is configured to drive the elevating base (421) to move up and down relative to the bracket (41), so as to enable the preform insertion member (422) to be inserted into the bottle preform and enable the preform body of the bottle preform to be inserted into a heating barrel (31). The rotation drive assembly (45) is configured to drive the preform insertion member (422) to rotate.

## Description

This application claims priority to Chinese Patent Application No. 202310276314.3 filed with the China National Intellectual Property Administration (CNIPA) on Mar. 21, 2023, the disclosure of which is incorporated herein by reference in its entirety.

### TECHNICAL FIELD

The present application relates to the field of bottle blowing technologies, for example, a preform elevating and rotating mechanism and a bottle preform heating device.

### BACKGROUND

In the packaging field, a large number of plastic bottles are typically required for filling. Due to its simplicity and low cost, a bottle blowing process becomes the primary method for producing plastic bottles. In a production line for blowing plastic bottles, a bottle preform needs to be heated by a bottle preform heating box. When the bottle preform is heated to a certain temperature, the bottle preform is blown into a plastic bottle by a bottle blowing machine.

In the related art, the bottle preform needs to be inserted into the heating box by using a bottle preform elevating mechanism. When the bottle preform is heated in the heating box, the bottle preform needs to be driven to rotate by a rotating mechanism so that the bottle preform is prevented from locally overheating. In the related art, the bottle preform rotating mechanism and the bottle preform elevating mechanism of a bottle preform heating device are two independent mechanisms, which occupy a large space and have high equipment costs.

Therefore, there is an urgent need for a preform elevating and rotating mechanism to solve the preceding problems.

### SUMMARY

In a first aspect, a preform elevating and rotating mechanism is provided. The preform elevating and rotating mechanism is configured to drive a bottle preform to move up and down and rotate. The preform elevating and rotating mechanism includes a bracket, a preform insertion assembly, an elevating drive assembly, and a rotation drive assembly.

The bracket is fixed on a carrier tray of a carrier mechanism, where the carrier tray is capable of driving the bracket to rotate.

The preform insertion assembly includes an elevating base and a preform insertion member, where the elevating base is slidably mounted on the bracket, and the preform insertion member is rotatably mounted on the elevating base.

The elevating drive assembly is configured to drive the elevating base to move up and down relative to the bracket, so as to enable the preform insertion member to be inserted into the bottle preform and enable the preform body of the bottle preform to be inserted into a heating barrel.

The rotation drive assembly is configured to drive the preform insertion member to rotate.

In a second aspect, a bottle preform heating device is provided. The bottle preform heating device includes a heating mechanism and the preform elevating and rotating mechanism mentioned above, where the preform elevating and rotating mechanism is configured to insert a bottle preform into a heating barrel of the heating mechanism and drive the bottle preform to rotate in the heating barrel.

### BRIEF DESCRIPTION OF DRAWINGS

FIG. 1 is a structural view of a preform with a handle according to an embodiment of the present application.
FIG. 2 is a structural view of a bottle preform heating device according to an embodiment of the present application.
FIG. 3 is a structural view of a preform feeding module according to an embodiment of the present application.
FIG. 4 is a structural view of a carrier mechanism according to an embodiment of the present application.
FIG. 5 is a structural view showing that a preform elevating and rotating mechanism according to an embodiment of the present application is mounted on a carrier tray.
FIG. 6 is a partial schematic view showing that a preform elevating and rotating mechanism according to an embodiment of the present application is mounted on a carrier tray.
FIG. 7 is a partial sectional view of a preform elevating and rotating mechanism according to an embodiment of the present application.
FIG. 8 is a structural view of a guide rail according to an embodiment of the present application.
FIG. 9 is a partial schematic view of a guide rail according to an embodiment of the present application.
FIG. 10 is a structural view showing heating mechanisms and an air cooling mechanism according to an embodiment of the present application.
FIG. 11 is a structural view of an air extraction box according to an embodiment of the present application.

### Reference list

| | |
|---|---|
| 100 | preform with a handle |
| 101 | preform body |
| 102 | handle |
| 1 | preform feeding module |
| 11 | preform feeding mechanism |
| 12 | transition mechanism |
| 13 | orientation mechanism |
| 2 | carrier mechanism |
| 21 | rack |
| 22 | carrier tray |
| 221 | upper tray body |
| 222 | connector |
| 223 | lower tray body |
| 23 | carrier tray drive assembly |
| 3 | heating mechanism |
| 31 | heating barrel |
| 32 | mounting base |
| 4 | preform elevating and rotating mechanism |
| 41 | bracket |
| 42 | preform insertion assembly |
| 421 | elevating base |
| 422 | preform insertion member |
| 4221 | elevating and rotating shaft |
| 4222 | preform insertion head |
| 423 | follower wheel |
| 43 | elevating drive assembly |
| 431 | guide rail |
| 4311 | body portion |
| 43111 | first horizontal section |
| 43112 | barrel detachment section |
| 43113 | second horizontal section |
| 43114 | third horizontal section |
| 43115 | fourth horizontal section |
| 43116 | barrel entry section |
| 43117 | fifth horizontal section |
| 4312 | first adjustment portion |
| 43121 | preform detachment section |
| 4313 | second adjustment portion |
| 43131 | preform entry section |
| 432 | reset member |
| 44 | guide assembly |
| 441 | slide rail |
| 442 | slide block |
| 45 | rotation drive assembly |
| 451 | rotation driver |
| 452 | input gear |
| 453 | output gear |
| 454 | slide sleeve |
| 5 | air cooling module |
| 51 | main exhaust pipe |
| 52 | air cooling mechanism |
| 521 | fan |
| 522 | exhaust duct |
| 523 | air extraction box |
| 5231 | connection portion |
| 5232 | air box portion |
| 52321 | duct |
| 5233 | air guide plate |
| 524 | bellow |
| 6 | preform picking manipulator |

### DETAILED DESCRIPTION

In the description of the present application, unless otherwise expressly specified and limited, the term "connected to each other", "connected", or "fixed" is to be construed in a broad sense, for example, as fixedly connected, detachably connected, or integrated; mechanically connected or electrically connected; directly connected to each other or indirectly connected to each other via an intermediary; or internally connected between two elements or interaction relations between two elements. For those of ordinary skill in the art, meanings of the preceding terms in the present application may be understood according to situations.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of the present application, orientations or position relations indicated by terms such as "upper", "lower", "left", and "right" are based on the drawings. These orientations or position relations are intended only to facilitate description and simplify an operation and not to indicate or imply that a device or element referred to must have such particular orientations or must be configured or operated in such particular orientations. Thus, these orientations or position relations are not to be construed as limiting the present application. In addition, the terms "first" and "second" are used only for distinguishing between descriptions and have no special meaning.

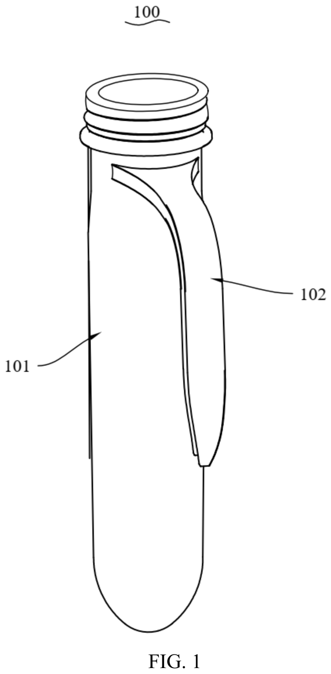

FIG. 1 is a structural view of a preform 100 with a handle according to this embodiment. As shown in FIG. 1, the preform 100 with the handle includes a preform body 101 and a handle 102 disposed at the upper end of the preform body 101. After the preform 100 with the handle is heated and blown, the preform body 101 is blown into the bottle body of a plastic bottle, and the handle 102 remains the same.

This embodiment provides a bottle preform heating device. The bottle preform heating device can be used for heating the preform 100 with the handle or a handleless bottle preform, which can implement automatic preform feeding, automatic heating, and automatic preform detachment. The bottle preform heating device has a compact workflow, a high equipment utilization rate, and high production efficiency.

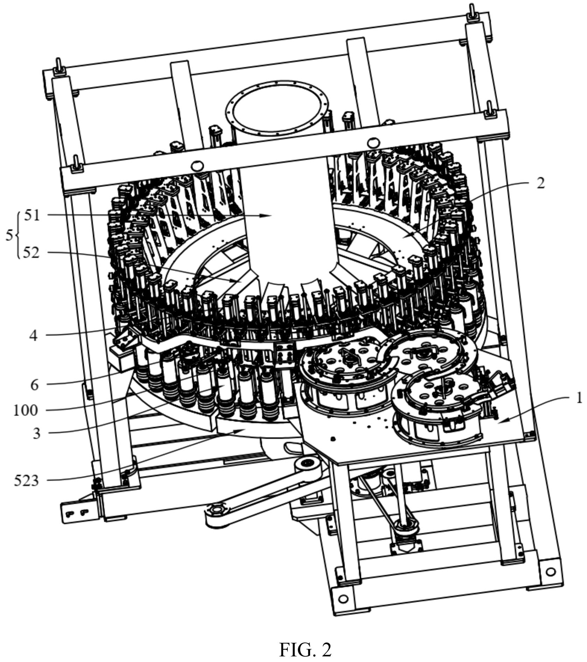

FIG. 2 is a structural view of a bottle preform heating device according to this embodiment. As shown in FIG. 2, the bottle preform heating device includes a preform feeding module 1, a carrier mechanism 2, heating mechanisms 3, preform elevating and rotating mechanisms 4, an air cooling module 5, and a preform picking manipulator 6. The preform feeding module 1 is configured to automatically convey the preform 100 with the handle. The carrier mechanism 2 serves as a structure for mounting the heating mechanisms 3 and the preform elevating and rotating mechanisms 4 and can drive each of the heating mechanism 3 to rotate synchronously with a respective one of the preform elevating and rotating mechanisms 4. Each of the preform elevating and rotating mechanisms 4 is configured to receive the preform 100 with the handle conveyed by the preform feeding module 1 and rotate the preform 100 with the handle to the heating mechanism 3 for heating. Each of the heating mechanisms 3 is configured to heat the preform 100 with the handle. The air cooling module 5 is configured to extract air from the heating mechanism 3 to prevent the preform 100 with the handle from locally overheating in a heating process. The preform picking manipulator 6 is configured to remove the preform 100 with the handle heated to a certain temperature and transfer the preform 100 with the handle to a bottle blowing machine for blowing.

With continued reference to FIG. 2, the multiple heating mechanisms 3 are arranged at intervals along the circumferential direction of the carrier mechanism 2, and the heating mechanism 3 includes a heating barrel 31. The multiple preform elevating and rotating mechanisms 4 are arranged at intervals along the circumferential direction of the carrier mechanism 2 and are in a one-to-one correspondence with the heating mechanisms 3. The preform elevating and rotating mechanism 4 is configured to receive the preform 100 with the handle conveyed by the preform feeding module 1 and insert the preform body 101 into the heating barrel 31, where the handle 102 is located outside the heating barrel 31.

With continued reference to FIG. 2, the air cooling module 5 includes a main exhaust pipe 51 and multiple air cooling mechanisms 52. The main exhaust pipe 51 is disposed in the middle of the carrier mechanism 2. The multiple air cooling mechanisms 52 are arranged at intervals along the circumferential direction of the carrier mechanism 2. Air outlets of the multiple air cooling mechanisms 52 communicate with the main exhaust pipe 51. One air cooling mechanism 52 may extract air from multiple heating barrels 31 so that the preform 100 with the handle is prevented from locally overheating. Thus, the number of air cooling mechanisms 52 is reduced, and the equipment cost is reduced. Exemplarily, the extension direction of the main exhaust pipe 51 is perpendicular to the carrier mechanism 2, that is, the center line of the main exhaust pipe 51 coincides with the rotation axis of the carrier mechanism 2. The air cooling mechanism 52 is connected to the bottoms of the heating barrels 31 for air extraction so that the hot air from the heating barrels 31 is extracted from the bottoms of the heating barrels 31. Thus, the hot air can be prevented from heating a preform opening in the heating barrel 31, and the preform opening is prevented from deforming due to heat. Compared with the extraction of air from the top of a heating box in the related art, the extraction of the air from the bottoms achieves a better air cooling effect and can prevent the preform opening from deforming due to heat, thereby improving a yield.

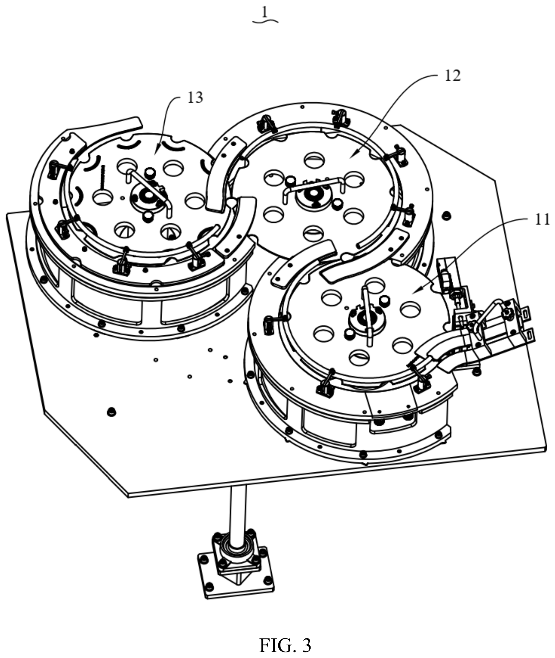

FIG. 3 is a structural view of the preform feeding module 1 according to this embodiment. As shown in FIGS. 3 and 2, the preform feeding module 1 includes a preform feeding mechanism 11, a transition mechanism 12, and an orientation mechanism 13. The preform feeding mechanism 11 is configured to receive the preform 100 with the handle on a conveyor line and convey the preform 100 with the handle to the transition mechanism 12. The transition mechanism 12 is configured to convey the preform 100 with the handle to the orientation mechanism 13. The orientation mechanism 13 is configured to adjust the direction of the handle 102 of the preform 100 with the handle and convey the preform 100 with the handle to the preform elevating and rotating mechanism 4.

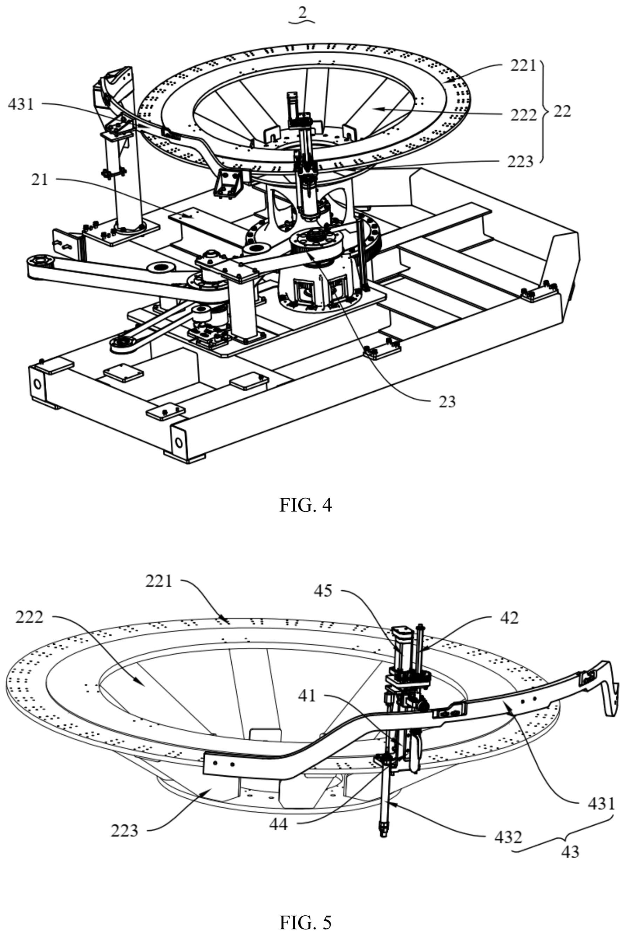

FIG. 4 is a structural view of the carrier mechanism 2 according to this embodiment. As shown in FIG. 4, the carrier mechanism 2 includes a rack 21, a carrier tray 22, and a carrier tray drive assembly 23. The carrier tray 22 is rotatably mounted on the rack 21. The carrier tray drive assembly 23 is configured to drive the carrier tray 22 to rotate relative to the rack 21. The carrier tray 22 includes an upper tray body 221, connectors 222, and a lower tray body 223. The diameter of the upper tray body 221 is larger than the diameter of the lower tray body 223. The multiple connectors 222 are connected between the upper tray body 221 and the lower tray body 223.

Exemplarily, the main exhaust pipe 51 of the air cooling module 5 is disposed in the middle of the lower tray body 223 of the carrier tray 22, and the center line of the main exhaust pipe 51 of the air cooling module 5 coincides with the center line of the lower tray body 223.

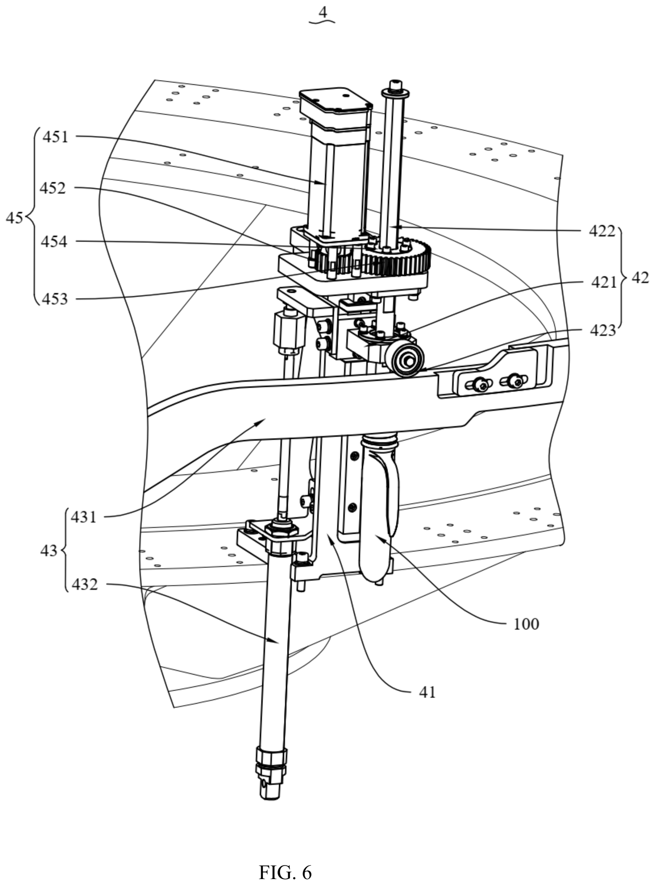

FIG. 5 is a structural view showing that the preform elevating and rotating mechanism 4 according to this embodiment is mounted on the carrier tray 22. FIG. 6 is a partial schematic view showing that the preform elevating and rotating mechanism 4 according to this embodiment is mounted on the carrier tray 22. As shown in FIGS. 5 and 6, the preform elevating and rotating mechanism 4 includes a bracket 41, a preform insertion assembly 42, and an elevating drive assembly 43. The bracket 41 is fixed on the carrier tray 22. The preform insertion assembly 42 includes an elevating base 421 and a preform insertion member 422. The elevating base 421 is slidably mounted on the bracket 41. The preform insertion member 422 is mounted on the elevating base 421 and located above the heating barrel 31. The elevating drive assembly 43 is configured to drive the elevating base 421 to move up and down relative to the bracket 41 so that the preform insertion member 422 is insertable into the preform 100 with the handle on the preform feeding module 1 and the preform body 101 of the preform 100 with the handle is inserted into the heating barrel 31. Exemplarily, the bracket 41 is fixed on the upper tray body 221 of the carrier tray 22.

The preform elevating and rotating mechanism 4 further includes a guide assembly 44. The guide assembly 44 includes a slide rail 441 and a slide block 442 that are in a sliding fit. The slide rail 441 is fixed on the bracket 41 along a vertical direction, and the slide block 442 is configured to mount the elevating base 421. The guide assembly 44 is provided so that it can be ensured that the elevating base 421 stably moves up and down along the slide rail 441.

The elevating drive assembly 43 includes a guide rail 431 and a reset member 432. The guide rail 431 includes a lifting section and a lowering section. The elevating base 421 is movable up along the lifting section of the guide rail 431. In addition, at the lowering section of the guide rail 431, the elevating base 421 moves down along the lowering section of the guide rail 431 under the action of the reset member 432. The elevating base 421 moves up and down, which can drive the preform insertion member 422 to move up and down. In the process where the preform insertion member 422 moves down, the preform insertion member 422 is inserted into the preform 100 with the handle, and the preform 100 with the handle is inserted into the heating barrel 31. In the process where the preform insertion member 422 moves up, the preform insertion member 422 drives the preform 100 with the handle to be detached from the heating barrel 31, and the preform insertion member 422 is detached from the preform 100 with the handle.

Optionally, the reset member 432 is a linear driver and is mounted on the bracket 41, and an output end of the reset member 432 is connected to the elevating base 421. Exemplarily, the reset member 432 may be a linear cylinder, a linear hydraulic cylinder, or a linear motor. Optionally, when the reset member 432 is the linear driver, the output end of the reset member 432 is hinged to the elevating base 421, which may be implemented through a floating connection, a hinge connection, or a spherical hinge. Of course, in other embodiments, the reset member 432 may be a reset spring with high strength. The spring is stretched when the elevating base 421 moves up. Thus, when the elevating base 421 moves to the lowering section of the guide rail 431, the spring can pull down the elevating base 421.

To prevent the preform insertion member 422 from moving down without limits under the drive of the reset member 432, a limit plate is disposed at the upper end of the preform insertion member 422. The limit plate is configured to limit the position to which the preform insertion member 422 moves down.

Optionally, the preform insertion assembly 42 further includes a follower wheel 423. The follower wheel 423 is rotatably mounted on the elevating base 421. The wheel surface of the follower wheel 423 can abut against the elevating drive assembly so that it can be ensured that the elevating base 421 can stably move up and down along the guide rail 431 and the frictional force between the elevating base 421 and the guide rail 431 is reduced.

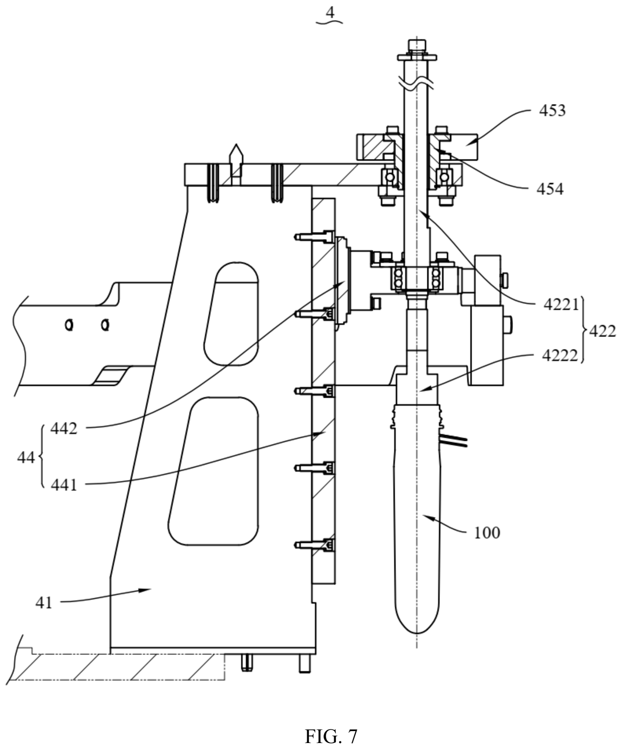

FIG. 7 is a partial sectional view of the preform elevating and rotating mechanism 4 provided in the present application. As shown in FIGS. 7 and 6, the preform elevating and rotating mechanism 4 further includes a rotation drive assembly 45. The preform insertion member 422 is rotatably mounted on the elevating base 421, and the rotation drive assembly 45 is configured to drive the preform insertion member 422 to rotate so that it is ensured that the preform 100 with the handle is uniformly heated in the heating process and is prevented from locally overheating.

The preform insertion member 422 includes a preform insertion head 4222 and an elevating and rotating shaft 4221 that are connected to each other. The elevating and rotating shaft 4221 is in a running fit with the elevating base 421 through a bearing. Exemplarily, the preform insertion head 4222 and the elevating and rotating shaft 4221 are connected to each other through a locking slot or a keyway so that the preform insertion head 4222 and the elevating and rotating shaft 4221 rotate synchronously. The preform insertion head 4222 may be a conventional preform insertion head in the related art. For example, the preform insertion head includes a first member and a second member. The second member is sleeved on the first member. A rubber O-ring is disposed between the second member and the first member. The second member is configured to be inserted into the bottle opening of the bottle preform. The second member is an expansion member. The second member can be smoothly inserted and expanded into the bottle opening of the bottle preform through elastic deformation of the rubber O-ring, which is not described here using examples one by one.

Optionally, the rotation drive assembly 45 includes a rotation driver 451, an input gear 452, an output gear 453, and a slide sleeve 454. The rotation driver 451 is mounted on the bracket 41 and is configured to drive the input gear 452 to rotate. The output gear 453 meshes with the input gear 452. The slide sleeve 454 is drivingly connected to the output gear 453. The elevating and rotating shaft 4221 of the preform insertion member 422 is slidably inserted into the slide sleeve 454, is rotatable along with the rotation of the slide sleeve 454, and is movable up and down relative to the slide sleeve 454. It is to be noted that the slide sleeve 454 is drivingly connected to the output gear 453, which means that the slide sleeve 454 may be fixed in the output gear 453 or the slide sleeve 454 and the output gear 453 may be fitted through a keyway, as long as it is ensured that the slide sleeve 454 rotates along with the output gear 453.

Exemplarily, the elevating and rotating shaft 4221 is drivingly fitted with the slide sleeve 454 through a straight keyway or a plane. When the elevating base 421 drives the preform insertion member 422 to move up and down, the preform insertion member 422 is movable up and down relative to the slide sleeve 454 and the output gear 453 so that the preform insertion head 4222 of the preform insertion member 422 enters the preform and the barrel and is detached from the barrel and the preform. When the output gear 453 drives the slide sleeve 454 to rotate, the elevating and rotating shaft 4221 can also drive the preform insertion head 4222 to rotate so that the preform 100 with the handle rotates along with the preform insertion head 4222, thereby allowing the preform 100 with the handle to be uniformly heated. In addition, the elevating and rotating shaft 4221 and the preform insertion head 4222 are coaxially disposed so that the elevating action and the rotating action are concentrated on the same axis, the structure is compact, and the elevating action and the rotating action are independent and do not interfere with each other.

Exemplarily, a motor with an encoder may be used for the rotation driver 451. Through program control, the rotation driver 451 drives the elevating and rotating shaft 4221 to drive the preform insertion head 4222 to rotate in the heating barrel 31 in a forward and reverse direction or at a variable speed. Thus, it is ensured that the preform 100 with the handle is uniformly heated. Through the encoder, different preform rotation requirements can be met. In addition, in the process where the preform 100 with the handle is heated by the heating barrel 31, the preform elevating and rotating mechanism 4 can accurately orient the handle 102 of the preform 100 with the handle to avoid heating the handle 102. Each heating barrel 31 is connected to the air cooling mechanism 52. The air cooling mechanism 52 is configured to extract air from the inside of the heating barrel 31 to prevent the preform 100 with the handle from locally overheating.

With continued reference to FIG. 7, the elevating and rotating shaft 4221 is rotatably connected to the elevating base 421 through a bearing. A circlip is disposed on the elevating and rotating shaft 4221. The elevating and rotating shaft 4221 is fixedly connected to the bearing through the circlip so that the elevating base 421 moves up and down to drive the elevating and rotating shaft 4221 to move up and down synchronously.

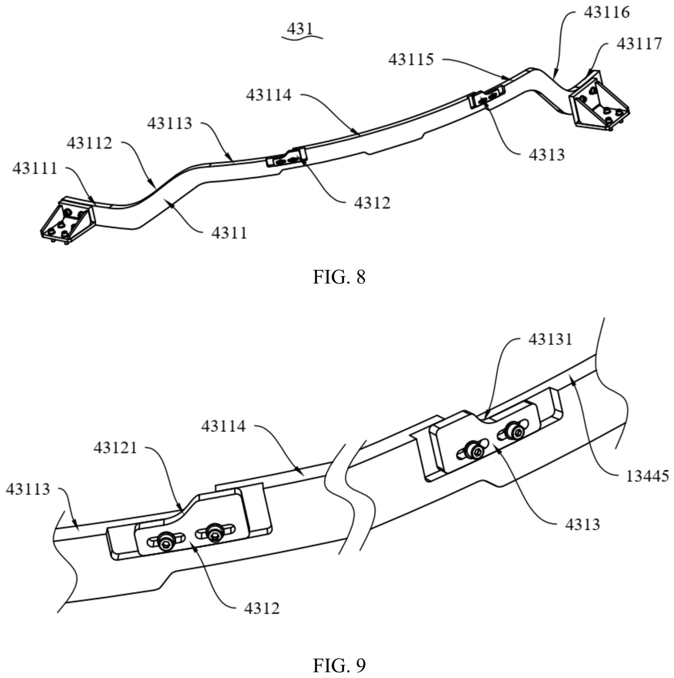

FIG. 8 is a structural view of the guide rail 431 according to this embodiment. As shown in FIG. 8, the guide rail 431 includes a barrel detachment section 43112, a preform detachment section 43121, a preform entry section 43131, and a barrel entry section 43116 that are sequentially arranged at intervals along a rotation direction of the carrier tray 22. The barrel detachment section 43112 and the preform detachment section 43121 are arc-shaped sections that extend up along the rotation direction of the carrier tray 22. The preform entry section 43131 and the barrel entry section 43116 are arc-shaped sections that move down along the rotation direction of the carrier tray 22. The elevating base 421 is movable up and down along the guide rail 431. The elevating base 421 is in a sliding fit with the slide rail 441 on the bracket 41 through the slide block 442. Therefore, when the carrier tray 22 rotates, the elevating base 421 is movable along the slide rail 441 under the action of the barrel detachment section 43112 and the preform detachment section 43121 of the guide rail 431, and when the carrier tray 22 continues rotating, the elevating base 421 is movable down along the preform entry section 43131 and the barrel entry section 43116 of the guide rail 431 under the drive of the reset member 432.

The points to which the preform insertion member 422 of the preform elevating and rotating mechanism 4 moves up and down need to be accurately aligned with the preform 100 with the handle conveyed by the preform feeding module 1 and the clamping end of the preform picking manipulator 6. This configuration aims to enable the preform insertion member 422 to be accurately inserted into the preform 100 with the handle and transfer the preform 100 with the handle into the heating barrel 31 or enable the preform insertion member 422 to be detached from the preform 100 with the handle so as to allow the preform picking manipulator 6 to remove the preform 100 with the handle. Exemplarily, along the rotation direction of the carrier tray 22, the start end of the preform detachment section 43121 of the guide rail 431 needs to be aligned with the clamping end of the preform picking manipulator 6. The clamping end of the preform picking manipulator 6 clamps the preform 100 with the handle. Then, when the elevating base 421 moves up along with the preform detachment section 43121, the preform insertion head 4222 is detached from the preform 100 with the handle, and the preform picking manipulator 6 transfers the preform 100 with the handle to the bottle blowing machine. In addition, the tail end of the preform entry section 43131 of the guide rail 431 needs to be aligned with the preform 100 with the handle conveyed by the preform feeding module 1. When the elevating base 421 moves down along the preform entry section 43131, the preform insertion head 4222 on the elevating base 421 can just be inserted into the preform 100 with the handle conveyed by the preform feeding module 1 so that the preform insertion head 4222 receives the preform 100 with the handle.

After the entire bottle preform heating device is assembled, due to a mounting error or a machining error of a part, the guide rail 431 is prone to be misaligned with the preform feeding module 1 and the preform picking manipulator 6. In this case, neither the overall position of the guide rail 431 nor the positions of the preform feeding module 1 and the preform picking manipulator 6 are convenient to adjust. In addition, if the guide rail 431 is misaligned with the preform feeding module 1 and the preform picking manipulator 6 once, multiple adjustments and repeated alignment are required, which not only increases the workload of a worker but also reduces the work efficiency.

To solve the preceding problem, the preform detachment section 43121 and the preform entry section 43131 of the guide rail 431 are designed to have adjustable positions. The positions of the preform detachment section 43121 and the preform entry section 43131 are separately adjusted so that the alignment between the preform detachment section 43121 and the preform picking manipulator 6 and the alignment between the preform entry section 43131 and the preform feeding module 1 are implemented. Thus, the adjustment is convenient to perform with high efficiency, and it is convenient to perform the adjustment repeatedly.

Optionally, the guide rail 431 includes a body portion 4311, two ends of the body portion 4311 are fixed on the rack 21, and the body portion 4311 is provided with the barrel detachment section 43112 and the barrel entry section 43116. The guide rail 431 further includes a first adjustment portion 4312, the first adjustment portion 4312 is provided with the preform detachment section 43121, and the position at which the first adjustment portion 4312 is mounted on the body portion 4311 is adjustable. The guide rail 431 further includes a second adjustment portion 4313, the second adjustment portion 4313 is provided with the preform entry section 43131, and the position at which the second adjustment portion 4313 is mounted on the body portion 4311 is adjustable. In this embodiment, the guide rail 431 includes the body portion 4311, the first adjustment portion 4312, and the second adjustment portion 4313. The first adjustment portion 4312 is provided with the preform detachment section 43121. The position at which the first adjustment portion 4312 is mounted on the body portion 4311 is adjustable along the rotation direction of the carrier tray 22 so that the distance between the preform detachment section 43121 and the barrel detachment section 43112 along the rotation direction of the carrier tray 22 is adjusted. The second adjustment portion 4313 is provided with the preform entry section 43131. The position at which the second adjustment portion 4313 is mounted on the body portion 4311 is adjustable along the rotation direction of the carrier tray 22 so that the distance between the preform entry section 43131 and the barrel entry section 43116 along the rotation direction of the carrier tray 22 is adjusted.

FIG. 9 is a partial schematic view of the guide rail 431 according to this embodiment. As shown in FIGS. 9 and 8, the body portion 4311 includes a first horizontal section 43111, the barrel detachment section 43112, a second horizontal section 43113, a third horizontal section 43114, a fourth horizontal section 43115, the barrel entry section 43116, and a fifth horizontal section 43117 that are arranged in sequence. The first horizontal section 43111 and the fifth horizontal section 43117 are each fixed on the rack 21. The second horizontal section 43113 and the third horizontal section 43114 are connected to each other through a step, and a first adjustment slot is provided in the range of the region where the second horizontal section 43113 and the third horizontal section 43114 are connected to each other. The length of the first adjustment slot is greater than the length of the first adjustment portion 4312. The first adjustment portion 4312 is fixed in the first adjustment slot along the length direction of the first adjustment slot, where the position of the first adjustment portion 4312 is adjustable. Exemplarily, the first adjustment portion 4312 is provided with an elongated hole extending along the rotation direction of the carrier tray 22, and the first adjustment slot is provided with a through hole so that the position of the first adjustment portion 4312 in the first adjustment slot is adjustable. Similarly, the third horizontal section 43114 and the fourth horizontal section 43115 are connected to each other through a step, and a second adjustment slot is provided in the range of the region where the third horizontal section 43114 and the fourth horizontal section 43115 are connected to each other. The length of the second adjustment slot is greater than the length of the second adjustment portion 4313. The second adjustment portion 4313 is fixed in the second adjustment slot along the length direction of the second adjustment slot, where the position of the second adjustment portion 4313 is adjustable. Exemplarily, the second adjustment portion 4313 is provided with an elongated hole extending along the rotation direction of the carrier tray 22, and the second adjustment slot is provided with a through hole so that the position of the second adjustment portion 4313 in the second adjustment slot is adjustable. Optionally, the first adjustment portion 4312 has two elongated holes, and two through holes corresponding to the two elongated holes are provided, and the second adjustment portion 4313 has two elongated holes, and two through holes corresponding to the two elongated holes are provided.

Exemplarily, the height difference between the second horizontal section 43113 and the first horizontal section 43111 is greater than the height difference between the third horizontal section 43114 and the second horizontal section 43113. That is, the height span of the barrel detachment section 43112 is greater than the height span of the preform detachment section 43121. The height difference between the fifth horizontal section 43117 and the fourth horizontal section 43115 is greater than the height difference between the fourth horizontal section 43115 and the third horizontal section 43114. That is, the height span of the barrel entry section 43116 is greater than the height span of the preform entry section 43131.

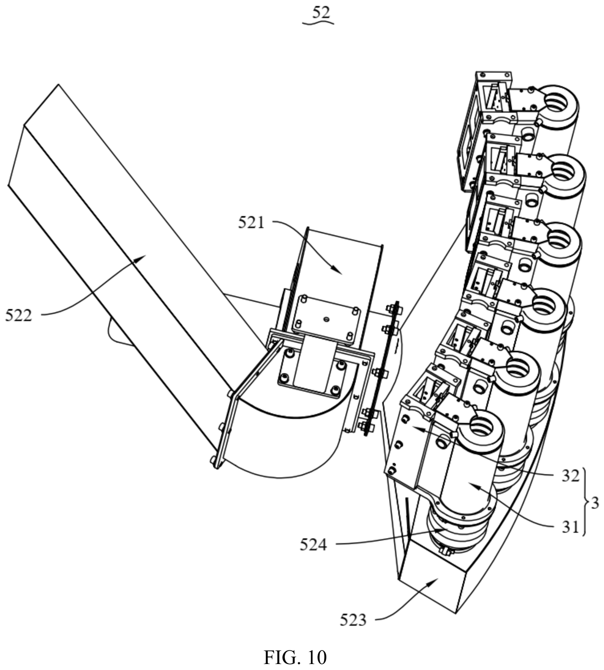

FIG. 10 is a structural view showing heating mechanisms 3 and an air cooling mechanism 52 according to this embodiment. As shown in FIG. 10, the heating mechanism 3 further includes a mounting base 32, the mounting base 32 is fixed on the bracket 41, the heating barrel 31 is mounted on the mounting base 32, and the heating barrel 31 and the preform insertion member 422 are coaxially disposed. In other embodiments, the heating mechanism 3 may be directly mounted on the carrier tray 22 as long as it is ensured that the preform insertion member 422 of the preform elevating and rotating mechanism 4 can insert the preform 100 with the handle into the heating barrel 31 of the heating mechanism 3.

Optionally, the heating barrel 31 includes a heating housing and heating lamps. Each of the heating lamps is partially accommodated in the heating housing. The multiple heating lamps are arranged at intervals along the length direction of the heating housing. The preform body 101 of the preform 100 with the handle is inserted into the heating housing and located in the middle of each of the heating lamps to be heated by the heating lamps.

The heating housing has a housing structure which is through from top to bottom. The preform 100 with the handle is inserted into the heating housing from the upper end of the heating housing under the action of the preform insertion member 422. The air cooling module 5 is connected to the lower portion of the heating housing, and air in the heating housing is extracted from the lower portion of the heating housing, thereby avoiding an excessively high local temperature in the heating housing.

With continued reference to FIG. 10, the air cooling mechanism 52 includes a fan 521, an exhaust duct 522, and an air extraction box 523. A first end of the exhaust duct 522 is connected to an air outlet of the fan 521, and a second end of the exhaust duct 522 is connected to the main exhaust pipe 51. The air extraction box 523 is connected to an air inlet of the fan 521, multiple ducts 52321 are provided on the air extraction box 523, and the heating barrels 31 are mounted on the ducts 52321 and communicate with the ducts 52321. In FIG. 10, one air cooling mechanism 52 includes six ducts 52321, and each duct 52321 is connected to one heating barrel 31. Of course, in other embodiments, any number of ducts 52321 may be provided on the air extraction box 523 of one air cooling mechanism 52. For example, the number of ducts 52321 may be set according to the size of the air extraction box 523 and the power of the fan 521, which is not limited here. With this configuration, the number of fans 521 can be reduced, the equipment cost can be reduced, and the machining, manufacturing, mounting, and positioning of the air cooling mechanism 52 can be facilitated.

Exemplarily, the heating barrel 31 is connected to the duct 52321 through a bellow 524. The connection is performed through the bellow 524, which can compensate for a machining error or a mounting error and facilitates mounting and operation.

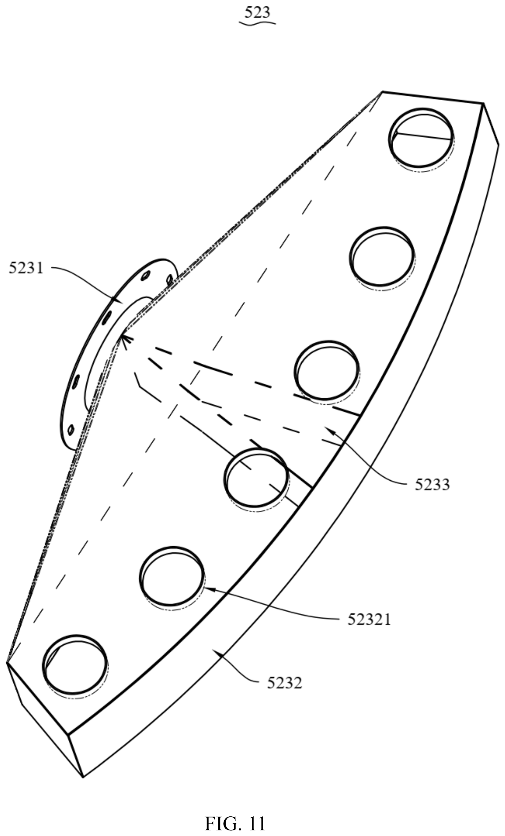

FIG. 11 is a structural view of the air extraction box 523 according to this embodiment. As shown in FIG. 11, the air extraction box 523 includes a connection portion 5231 and an air box portion 5232 communicating with each other. The connection portion 5231 is connected to the air inlet of the fan 521. The air box portion 5232 is provided with the ducts 52321. The air box portion 5232 is fan-shaped, and the air box portions 5232 of the multiple air cooling mechanisms 52 are spliced into a circle. With this configuration, the space below the upper tray body 221 of the carrier tray 22 can be fully utilized. As can be seen, the carrier tray 22 is designed to include the large-diameter upper tray body 221 and the small-diameter lower tray body so that it is convenient to mount the preform elevating and rotating mechanisms 4, the heating mechanisms 3, and the main exhaust pipe 51 of the air cooling module 5. In addition, a sufficient mounting space can be reserved below the lower tray body 223, which facilitates the arrangement of the heating mechanisms 3 and the air cooling mechanisms 52.

With continued reference to FIG. 11, the air extraction box 523 further includes an air guide plate 5233. The air guide plate 5233 is mounted in the air box portion 5232 and divides the air box portion 5232 into multiple air extraction spaces that are independently provided. The multiple ducts 52321 on the air box portion 5232 are divided into multiple duct groups, and the duct groups are configured to be in a one-to-one correspondence with the air extraction spaces. The air box portion 5232 of the air extraction box 523 can be divided into the independent air extraction spaces through the air guide plate 5233 so that air can be split. Thus, it is ensured that the air extraction efficiency of each air extraction space is nearly the same. Accordingly, it is ensured that the air cooling effect on the corresponding heating barrel 31 is similar, and the problem is avoided that the air cooling effects on some heating barrels 31 are poor and the preform 100 with the handle in each of the heating barrels 31 locally overheats while the air cooling effects on some heating barrels 31 are good, the preform 100 with the handle in each of the heating barrels 31 is heated with excessively low efficiency, and a heating requirement cannot be met. In this manner, power consumption is reduced, and air cooling efficiency is improved.

Optionally, the air guide plate 5233 is V-shaped. The tip of the air guide plate 5233 is close to the connection portion 5231, and the open end of the air guide plate 5233 is away from the connection portion 5231. An independent region not requiring air extraction can be isolated through the V-shaped air guide plate 5233. Thus, the region requiring air extraction in the air box portion 5232 is reduced so that the air extraction effect of the fan 521 can be ensured.

In FIG. 11, one air guide plate 5233 is provided. The air guide plate 5233 is disposed in the middle of the air box portion 5232 so that the air box portion 5232 is divided into two independent air extraction spaces and one space not requiring air extraction. Every three ducts 52321 among the six ducts 52321 form one duct group, and each duct group communicates with one air extraction space. Of course, in other embodiments, two air guide plates 5233 may be provided, and the details are not repeated here.

The working process of the heating device for the preform 100 with the handle provided in this embodiment is described below.
1. Preforms 100 with handles are conveyed by the preform feeding module 1. When the preforms 100 with the handles are conveyed by the preform feeding mechanism 11 and the transition mechanism 12, the directions of the handles 102 of the preforms 100 with the handles are in disorder. Under the action of the orientation component of the orientation mechanism 13, the handles 102 of the preforms 100 with the handles are adjusted to a uniform direction.
2. The carrier mechanism 2 drives the preform elevating and rotating mechanism 4, the heating mechanism 3, and the air cooling module 5 to rotate. In this process, the preform insertion member 422 of the preform elevating and rotating mechanism 4 is inserted into the preform 100 with the handle conveyed by the orientation mechanism 13 under the cooperation of the preform entry section 43131 of the guide rail 431 and the reset member 432. As the carrier tray 22 continues rotating, the preform insertion member 422 drives the preform 100 with the handle to enter the heating barrel 31 of the heating mechanism 3 under the cooperation of the barrel entry section 43116 of the guide rail 431 and the reset member 432.
3. The carrier mechanism 2 drives the preform elevating and rotating mechanism 4, the heating mechanism 3, and the air cooling module 5 to rotate continuously. In this process, the heating mechanism 3 and the air cooling module 5 are started at the same time, the heating barrel 31 of the heating mechanism 3 heats the preform 100 with the handle, and the air cooling module 5 is configured to extract hot air in the heating barrel 31 to prevent the preform 100 with the handle in the heating barrel 31 from locally overheating. The rotation drive assembly 45 of the preform elevating and rotating mechanism 4 drives the preform insertion member 422 to drive the preform 100 with the handle to rotate, thereby ensuring that the preform 100 with the handle is uniformly heated and is prevented from locally overheating.
4. The carrier mechanism 2 drives the preform elevating and rotating mechanism 4, the heating mechanism 3, and the air cooling module 5 to rotate continuously. In this process, when the preform 100 with the handle is heated to a state suitable for bottle blowing, the preform insertion member 422 of the preform elevating and rotating mechanism 4 drives, under the cooperation of the barrel detachment section 43112 of the guide rail 431, the preform 100 with the handle to be detached from the heating barrel 31, and the preform picking manipulator 6 clamps the preform 100 with the handle. As the carrier tray 22 rotates continuously, the preform insertion member 422 is detached from the preform 100 with the handle under the action of the preform detachment section 43121 of the guide rail 431, and the preform picking manipulator 6 transfers the preform 100 with the handle into the bottle blowing machine for bottle blowing.

The preform elevating and rotating mechanism provided in the present application can drive the bottle preform to move up and down and rotate, which has a compact structure, occupies a small space, and is low in equipment cost.

The bottle preform heating device provided in the present application can drive, by using the preceding preform elevating and rotating mechanism, the bottle preform to move up and down and rotate, which has a compact equipment structure and occupies a small space.

## Claims

1. A preform elevating and rotating mechanism, configured to drive a bottle preform to move up and down and rotate, and comprising:
a bracket (41) fixed on a carrier tray (22) of a carrier mechanism (2), wherein the carrier tray (22) is capable of driving the bracket (41) to rotate;
a preform insertion assembly (42) comprising an elevating base (421) and a preform insertion member (422), wherein the elevating base (421) is slidably mounted on the bracket (41), and the preform insertion member (422) is rotatably mounted on the elevating base (421);
an elevating drive assembly (43) configured to drive the elevating base (421) to move up and down relative to the bracket (41), so as to enable the preform insertion member (422) to be inserted into the bottle preform and enable the bottle preform to be inserted into a heating barrel (31); and
a rotation drive assembly (45) configured to drive the preform insertion member (422) to rotate.

2. The preform elevating and rotating mechanism according to claim 1, wherein the elevating drive assembly (43) comprises a guide rail (431) and a reset member (432), the reset member (432) is mounted on the bracket (41), an output end of the reset member (432) is connected to the elevating base (421), the reset member (432) is configured to drive the elevating base (421) to move downward, the elevating base (421) is capable of moving up along the guide rail (431) and capable of being driven by the reset member (432) to move down along the guide rail (431).

3. The preform elevating and rotating mechanism according to claim 2, wherein the guide rail (431) comprises a barrel detachment section (43112), a preform detachment section (43121), a preform entry section (43131), and a barrel entry section (43116) that are sequentially arranged at intervals along a rotation direction of the carrier tray (22), the barrel detachment section (43112) and the preform detachment section (43121) are arc-shaped sections that extend up along the rotation direction of the carrier tray (22), the preform entry section (43131) and the barrel entry section (43116) are arc-shaped sections that extend down along the rotation direction of the carrier tray (22), and the elevating base (421) is movable up and down along the guide rail (431).

4. The preform elevating and rotating mechanism according to claim 3, wherein the carrier mechanism (2) further comprises a rack (21), the carrier tray (22) is rotatably mounted on the rack (21), the guide rail (431) comprises a body portion (4311), two ends of the body portion (4311) are fixed on the rack (21), and the body portion (4311) is provided with the barrel detachment section (43112) and the barrel entry section (43116).

5. The preform elevating and rotating mechanism according to claim 4, wherein
the guide rail (431) further comprises a first adjustment portion (4312), the first adjustment portion (4312) is provided with the preform detachment section (43121), and a position at which the first adjustment portion (4312) is mounted on the body portion (4311) is adjustable.

6. The preform elevating and rotating mechanism according to claim 4 or 5, wherein the guide rail (431) further comprises a second adjustment portion (4313), the second adjustment portion (4313) is provided with the preform entry section (43131), and a position at which the second adjustment portion (4313) is mounted on the body portion (4311) is adjustable.

7. The preform elevating and rotating mechanism according to claim 2, wherein the preform insertion assembly (42) further comprises a follower wheel (423), the follower wheel (423) is rotatably mounted on the elevating base (421), and a wheel surface of the follower wheel (423) is capable of contacting the guide rail (431) and is movable along the guide rail (431).

8. The preform elevating and rotating mechanism according to claim 1, wherein the rotation drive assembly (45) comprises a rotation driver (451), an input gear (452), an output gear (453), and a slide sleeve (454), the rotation driver (451) is mounted on the bracket (41) and is configured to drive the input gear (452) to rotate, the output gear (453) meshes with the input gear (452), the slide sleeve (454) is drivingly connected to the output gear (453), and the preform insertion member (422) is configured to slidably pass through the slide sleeve (454) and is rotatable along with rotation of the slide sleeve (454).

9. The preform elevating and rotating mechanism according to claim 1, wherein the preform insertion member (422) comprises an elevating and rotating shaft (4221) and a preform insertion head (4222), and the elevating and rotating shaft (4221) is drivingly connected to the elevating base (421).

10. The preform elevating and rotating mechanism according to claim 1, further comprising a guide assembly (44), wherein the guide assembly (44) comprises a slide rail (441) and a slide block (442) that are in a sliding fit, the slide rail (441) is fixed on the bracket (41) along a vertical direction, and the slide block (442) is fixedly connected to the elevating base (421).

11. A bottle preform heating device, comprising a heating mechanism (3) and the preform elevating and rotating mechanism according to any one of claims 1 to 10, wherein the preform elevating and rotating mechanism is configured to insert a bottle preform into the heating barrel (31) of the heating mechanism (3) and drive the bottle preform to rotate in the heating barrel (31).
